# EUROPÄISCHE PATENTSCHRIFT

(11) **EP 2 986 882 B1**
(45) Veröffentlichungstag und Bekanntmachung des Hinweises auf die Patenterteilung: **17.05.2017**
(21) Anmeldenummer: 14736678.5
(22) Anmeldetag: 25.06.2014
(51) Int. Cl.: F16L 59/18, F16L 19/025, F16L 51/00

(54) **ROHRVERBINDUNG ZUR DURCHLEITUNG EINES UNTER DRUCK STEHENDEN FLUIDS**
TUBE CONNECTION FOR CONVEYING A PRESSURISED FLUID
RACCORD DE TUYAUTERIE POUR LE PASSAGE D'UN FLUIDE SOUS PRESSION

(30) Priorität: 15.07.2013 EP 13176514
(43) Veröffentlichungstag der Anmeldung: 24.02.2016
(73) Patentinhaber: Siemens Aktiengesellschaft, 80333 München (DE)
(72) Erfinder: BÖTTCHER, Andreas, 40822 Mettmann (DE); KRIEGER, Tobias, 46147 Oberhausen (DE); LAPP, Patrick, 10367 Berlin (DE)
(86) Internationale Anmeldenummer: PCT/EP2014/063394
(87) Internationale Veröffentlichungsnummer: WO 2015/007483

(56) Entgegenhaltungen:
- DE-A1- 19 859 422
- DE-U- 1 960 933
- DE-U1- 9 015 457
- US-A- 4 508 374
- US-A1- 2011 227 337

## Beschreibung

Die Erfindung betrifft eine Rohrverbindung zur Durchleitung eines unter Druck stehenden Fluids, umfassend zwei rohrförmige Anschlussstücke, die nach Art einer Kegelklemmverbindung ineinandersteckend von einer Überwurfmutter miteinander verschraubt sind, wobei jedes Anschlussstück eine konische Dichtfläche aufweist, welche dichtend an der anderen der beiden Dichtflächen anliegt.

Eingangs genannte Rohrverbindungen sind aus dem Stand der Technik bestens bekannt. Beispielsweise offenbart die DE 1 960 933 U ein Anschlussstück als Teil einer derartigen Rohrverbindung, welches an einem Rohrende angeschweißt werden kann. Das bekannte Anschlussstück wird dabei in ein zumindest teilweise komplementäres Anschlussstück eingesteckt, wobei die beiden Anschlussstücke mit einer Überwurfmutter miteinander verschraubt werden. Dabei werden die konischen Dichtflächen aneinander gepresst, wodurch eine dichte Rohrverbindung entsteht. Die Rohrverbindung wird zumeist zur Durchleitung von Hydrauliköl eingesetzt. Es hat sich jedoch gezeigt, dass derartige Verbindungen bei der Durchleitung von Fluiden mit variierender oder unterschiedlicher Temperatur, beispielsweise bei der Umstellung von einem gasförmigen oder flüssigen Brennstoffes auf ein Leitungs-Spülmedium, undicht werden können.

Aufgabe der Erfindung ist daher die Bereitstellung einer Rohrverbindung zur Durchleitung eines unter Druck stehenden Fluids, welche trotz der Durchleitung von Fluiden mit wechselnder Temperatur dauerhaft zuverlässig dicht ist.

Die der Erfindung zugrunde liegende Aufgabe wird mit einer Rohrverbindung gelöst, welche den Merkmalen des Anspruchs 1 entspricht. Vorteilhafte Weiterbildungen der Rohrverbindungen sind in den abhängigen Ansprüchen angegeben, deren Merkmale entsprechend den angegebenen Rückbezügen miteinander kombiniert werden können. Erfindungsgemäß ist eine Rohrverbindung vorgesehen zur Durchleitung eines unter Druck stehendes Fluids,
umfassend zwei rohrförmige Anschlussstücke, die nach Art einer Kegelklemmverbindung ineinandersteckend von einer Überwurfmutter miteinander verschraubt sind, wobei jedes Anschlussstück eine konische Dichtfläche aufweist, welche jeweils an der anderen der beiden Dichtflächen anliegt,
wobei die Überwurfmutter einen rohrförmigen Abschnitt umfasst, der zumindest teilweise ein Innengewinde aufweist zum Verschrauben der Überwurfmutter auf einem ersten rohrförmigen Anschlussstück und einen an einem Ende des rohrförmigen Abschnitts angeordneten Kragen zum axialen Verspannen eines rohrförmigen zweiten Anschlussstückes mit dem ersten Anschlussstück, und wobei der Kragen eine Anzahl von entlang des Umfangs verteilten Schlitzen aufweist.

In anderen Worten ist vorgesehen, dass die Überwurfmutter der Rohrverbindung - zum Verschrauben der Überwurfmutter auf einem ersten rohrförmigen Anschlussstück - einen rohrförmigen Abschnitt, der zumindest teilweise ein Innengewinde aufweist und - zum axialen Verspannen eines rohrförmigen zweiten Anschlussstückes mit dem ersten Anschlussstück - einen an einem Ende des Abschnitts angeordneten Kragen umfasst, wobei der Kragen eine Anzahl von entlang des Umfangs verteilten Schlitzen aufweist, die den Kragen segmentieren.

Der Erfindung liegt die Erkenntnis zugrunde, dass bei durch Überwurfmuttern gesicherten Rohrverbindungen bei variierender Temperatur des Fluids oder bei einem Fluidwechsel, deren Fluide unterschiedliche Temperaturen aufweisen, das innen sitzende Anschlussstück thermisch schneller reagiert als das äußere der beiden Anschlussstücke. Dies kann dazu führen, dass bei absinkenden Temperaturgradienten der Kegel der inneren Dichtfläche schneller schrumpft als der Kegel der äußeren Dichtfläche, was zu Folge hat, dass einerseits Undichtigkeiten auftreten können und andererseits das Losbrechmoment der Überwurfmutter sich verringern kann.

Mithin haben die Erfinder erkannt, dass bisherige Rohrverschraubungen mit konventionellen Überwurfmuttern sehr unelastisch sind, so dass bei der Überwurfmutter nur sehr wenige Gewindegänge bis hin zu einem Gewindegang die gesamte Verspannung der Rohrverbindung bewerkstelligt. Um deshalb ein Lösen der Überwurfmutter weiter zu erschweren, wird eine elastische Gestaltung der Verschlussmittel benötigt. Um dies zu gewährleisten, wird erstmalig eine Überwurfmutter vorgeschlagen, deren Kragen geschlitzt ist. Der Kragen ist dabei derjenige Bestandteil der Überwurfmutter, mit welchem beim Aufschrauben der Überwurfmutter auf dem ersten Anschlussstück der Rohrverbindung das zweite Anschlussstück in Richtung des ersten Anschlussstücks geschoben wird.

Durch die Schlitzung des Kragens verhält sich die erfindungsgemäße Überwurfmutter ähnlich einer Dehnschraube in einer Schraubverbindung, also wie eine vorgespannte Zugfeder. Die neue Eigenschaft der Überwurfmutter - die elastische Federung - bewirken dabei die durch die Schlitzung entstandenen Segmente, welche nachfolgend auch als Klemmhaken bezeichnet werden. Ihre Verwendung verhindert, dass Längenänderungen im Betrieb der Rohrverbindung - z.B. durch Temperaturänderungen - zu starken Kraftänderungen in der Verbindung führen, welche das Lösen der Verbindung ermöglichen konnte. Berechnungen zeigten, dass bei Temperaturänderung des durch die Rohrverbindung geführten Mediums, das Losbrechmoment der bisherigen Schraubverbindung auf mehr als das Doppelte erhöht werden konnte, wodurch selbst bei auftretenden Vibrationen an der erfindungsgemäße Rohrverbindung diese ihre Dichtigkeit dauerhaft aufrechterhalten kann.

Die Klemmhaken, die durch die Schlitzung des Kragens entstehen, sorgen durch ihre federnde, elastische Wirkung dafür, dass beim Zusammenziehen der Verschraubung die Pressung des Dichtsitzes erhalten bleibt und im Vergleich zur konventionellen Ausführung weniger stark abfällt, wenn aufgrund von Temperaturschwankungen einige Bestandteile der Rohrverbindung sich schneller abkühlen oder aufheizen als andere Bestandteile der Rohrverbindung. Durch die Verwendung der erfindungsgemäßen Überwurfmutter in der Rohrverbindung fällt im besagten Betriebsfall die bei der Montage der Rohrverbindung erzeugte Vorspannung weniger stark ab. Die erfindungsgemäße Rohrverbindung bietet auch den Vorteil, schnelle Änderungen der Belastung, sogenannte Wechselbeanspruchung, und etwaige Laststöße durch die nun mögliche Dehnung zu abzufangen. Besonderer Vorteil der erfindungsgemäßen Rohrverbindung ist, dass bei einer Nachrüstung bestehender Rohrverbindung lediglich die Überwurfmutter auszutauschen ist und die anderen Bestandteile der Rohrverbindung unverändert weiter benutzt werden können. Es hat sich zudem gezeigt, dass durch die signifikante Erhöhung des Losbrechmoments die vorgeschlagene Rohrverbindung selbst ohne zusätzliche Verdrehsicherung, wie beispielsweise eine Kontermutter, auskommen kann; sie ist mithin selbstsicher. Weiter lässt die konstruktiv einfache Lösung sich ebenso einfach herstellen, was kostenmindernd ist.

Das dem Kragen abgewandte Ende der Schlitze ist vorzugweise rund gestaltet, um Belastungen wie zu Beispiel Kerbspannung bei rechteckig endenden Schlitzen, zu verringern. Anstelle dessen oder alternativ könnten auch Entlastungsbohrungen vorgesehen sein.

Es sei bemerkt, dass sich die Begriffe "axial" und "radial" sowie "innen" und "außen" sich stets auf die Symmetrieachse der Rohrverbindung beziehen, entlang welcher sich die Rohre erstrecken und entlang welcher das von der Rohrverbindung geleitete Medium strömt.

Gemäß einer ersten vorteilhaften Ausgestaltung weisen die Schlitze eine derartige axiale Ausdehnung auf, dass sich diese bis in den rohrförmigen Abschnitt hinein erstrecken. Mithin weisen die Klemmhaken prinzipiell zwei Schenkel auf, wobei der erste Schenkel von dem Kragen gebildet ist und der zweite Schenkel sich parallel zur axialen Ausdehnung der Schlitze erstreckt. Mit anderen Worten: die Klemmhaken sind prinzipiell L-förmig, wobei einer der beiden Schenkel des L-förmigen Klemmhakens in den rohrförmigen Abschnitt übergeht. Mit Hilfe dieser Ausgestaltung kann die Elastizität der Überwurfmutter besonders einfach eingestellt werden. Zudem wird die erforderliche Elastizität der einzelnen Klemmhaken in denjenigen Bereichen der Überwurfmutter gewährleistet, in dem die Klemmhaken in den ungeschlitzen rohrförmigen Abschnitt übergehen. Dies verringert die mechanische Belastung der Überwurfmutter bei größerer Elastizität im Vergleich zur derjenigen Überwurfmutter, bei der nur der Kragen geschlitzt ist.

Gemäß einer weiteren vorteilhaften Ausgestaltung weist die Überwurfmutter eine axiale Ausdehnung insgesamt auf, wobei sich die Schlitze bis zur Mitte axialen Ausdehnung der Überwurfmutter erstrecken. Hierdurch verbleibt ein restlicher rohrförmiger Abschnitt, der ungeschlitzt ist und an dessen Innenfläche das Innengewinde zur Verschraubung der Überwurfmutter auf einen der beiden rohrförmigen Anschlussstücke vorgesehen ist. Die Integrität der Verschraubung im Bereich des Innengewindes wird somit durch die Schlitze nicht beeinträchtigt. Vorzugsweise beträgt der Abstand zwischen dem Innengewinden und den Schlitzenden ca. 2 mm.

Mit der Erfindung werden insbesondere die bestehenden Kegelklemmverbindungen ertüchtigt, auch Fluide - gasförmig oder flüssig - im stationären wie transienten Zustand zu führen, wobei die Temperaturdifferenz zwischen Fluid und Umgebung einerseits sehr unterschiedlich sein und andererseits schwanken kann. Beispielsweise kann nun auch die Rohrverbindung bei sehr hohen Umgebungstemperaturen eingesetzt werden. Bei Rohrverbindungen von Brennstoffleitungen stationärer Gasturbinen können die Umgebungstemperaturen bis zu ~420°C betragen und Fluidtemperaturen von ca. 20°C auftreten (oder auch 230°C bei Brennstoffvorwärmung). Daraus resultiert eine Temperaturdifferenz von 400K bzw. 190K im stationären Betrieb. Im transienten Fall, beispielsweise wenn die Rohrverbindung aufgeheizt ist und kein Fluid führt und dann die Fluidzuführung erfolgt, oder wenn die Umgebung und somit auch die Rohrverbindung sich bis auf eine stationäre Temperatur aufheizt und das vergleichsweise kalte Fluid in der Leitung strömt, kommt es zu einer unterschiedlichen zeitlich begrenzten Ausdehnung der Anschlussstücke, deren sichere Verbindung durch die Überwurfmutter auch für die Aufheizzeit der Umgebung, welche erfahrungsgemäß etwa 200 Sekunden betragen kann, gewährleistet werden kann.

Insgesamt wird mit der Erfindung eine Rohrverbindung zur Durchleitung eines unter Druck stehenden Fluids angegeben, umfassend zwei rohrförmige Anschlussstücke für eine Kegelklemmverbindung, die ineinandersteckend von einer Überwurfmutter miteinander verschraubt sind, wobei jedes Anschlussstück eine konische Dichtfläche aufweist, welche dichtend an der anderen anliegt. Um eine dichte und zuverlässige Rohrverbindung auch zur Durchleitung eines Fluids mit wechselnder bzw. variierender Temperatur bereitzustellen, wird vorgeschlagen, dass die Überwurfmutter kragenseitig geschlitzt ist.

Weitere Vorteile und Merkmale der Erfindung werden anhand eine Ausführungsbeispiels näher erläutert. Es zeigen
- Figur 1: in perspektivischer Darstellung eine Rohrverbindung zur Durchleitung eines unter Druck stehenden Fluids mit einer axial teilweise geschlitzten Überwurfmutter und
- Figur 2: den Längsschnitt durch die Rohrverbindung mit der erfindungsgemäßen Überwurfmutter gemäß Figur 1.

In allen Figuren sind identische Merkmal mit den gleichen Bezugszeichen versehen.

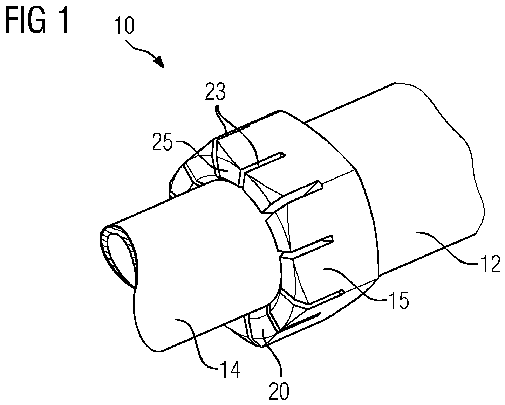

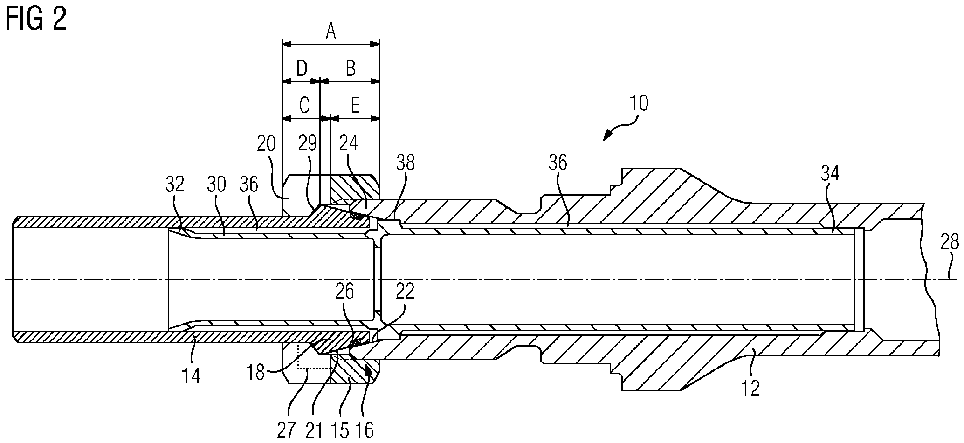

Figur 1 zeigt in perspektivischer Darstellung eine Rohrverbindung 10 zur Durchleitung eines unter Druck stehenden Fluids. Die Rohrverbindung 10 verbindet zwei rohrförmige Anschlussstücke 12, 14 lösbar miteinander. Als lösbares Element weist die Rohrverbindung 10 eine Überwurfmutter 15 auf. Im gezeigten Ausführungsbeispiel ist die Überwurfmutter 15 mit einem Außensechskant ausgestattet. An einem axialen Ende weist die Überwurfmutter 15 einen für sie typischen Kragen 20 auf. Gegenüber konventionellen Überwurfmuttern weist die erfindungsgemäße Überwurfmutter 15 Schlitze 23 auf, die zumindest den Kragen 20, vorzugsweise aber auch einen Teil des kragenlosen axialen Abschnitts der Überwurfmutter 15 segmentartig in Klemmhaken 25 unterteilt. Im gezeigten Ausführungsbeispiel sind insgesamt zwölf Klemmhaken 25 und somit zwölf Schlitze 23 vorgesehen, von denen jeweils sechs Schlitze 23 an den Ecken des Sechskants angeordnet sind und jeweils sechs Schlitze 23 an den dazwischen angeordneten ebenen Flächen. Die Schlitze 23 erstrecken sich dabei nicht über die axiale Gesamtlänge A (Figur 2) der Überwurfmutter 15, sondern nur vom kragenseitigen Ende bis etwa zur Hälfte. Je nach Anforderung kann auch eine geringere oder auch größere Anzahl an Klemmhaken 25 bzw. Schlitzen 23 vorgesehen sein.

Die Figur 2 zeigt in einem Längsschnitt die Rohrverbindung 10 zur Durchleitung eines unter Druck stehenden Fluids. Entlang einer Symmetrieachse 28 der Rohrverbindung 18 erstrecken sich die rohrförmigen Anschlussstücke 12, 14, die für eine Kegelklemmverbindung 16 ausgestaltet sind. Das zweite Anschlussstück 14 weist dazu einen Kegel 18 mit einer nach außen gerichteten konischen Dichtfläche 21 auf. In einer zur Dichtfläche 21 korrespondierenden Neigung weist das erste Anschlussstück 12 eine ebenfalls konische Dichtfläche 22 auf, als Teil eines Kegels 24. Der Kegel 24 bildet den äußeren Kegel und der Kegel 18 den inneren Kegel der Kegelklemmverbindung 16.

In der Dichtfläche 21 ist eine endlos umlaufende Ringnut 26 zur Aufnahme von Graphit als Dichtmittel vorgesehen. Beide Anschlussstücke 12, 14 sind mit Hilfe der Überwurfmutter 15 miteinander verbunden. Im Detail ist die Überwurfmutter 15 auf das erste Anschlussstück 12 aufgeschraubt, wobei die Überwurfmutter 15 mit ihrem Kragen 20 einen konischen Wellenbund 29 als rückwärtigen Teil des Kegels 18 des zweiten Anschlussstückes 14 in Richtung des ersten Anschlussstückes 12 presst. Die beiden Anschlussstücke 12, 14 sind rohrförmig ausgebildet, so dass in ihrem Inneren das Fluid, beispielsweise ein Hydraulik-Öl oder auch ein gasförmiger oder flüssiger Brennstoff, weitergeleitet werden kann.

Im Detail weist die Überwurfmutter 15 eine axiale Gesamtlänge auf, die nachfolgend mit A bezeichnet ist. Im Sinne dieser Patentanmeldung kann die Überwurfmutter 15 gedanklich in einen rohrförmigen Abschnitt B unterteilt werden, an dem sich der Kragenabschnitt D anschließt. Im Kragenabschnitt D ist der Innendurchmesser der Überwurfmutter 15 reduziert, so dass sich dadurch der schulterförmige Kragen 20 ergibt, mit dem der Wellenbund 29 des zweiten rohrförmigen Anschlussstückes 14 verspannt werden kann. Die den Kragen 20 segmentierenden Schlitze 23 weisen ausgehend vom kragenseitigem Ende eine axiale Schlitzlänge C auf, wobei im gezeigten Ausführungsbeispiel die axiale Schlitzlänge C so gewählt ist, dass sich die Schlitze 23 bis in den rohrförmigen Abschnitt B der Überwurfmutter 15 hinein erstrecken. Dadurch ergibt sich ein Verschraubungsabschnitt E, an dem sich die prinzipiell L-förmigen Klemmhaken 25 monolithisch anschließen. Je nach gewähltem Anzugsmoment der Überwurfmutter 15 besteht aufgrund der Schlitzung die Möglichkeit, dass die Klemmhaken 19 aufgrund des konischen Wellenbundes 29 geringfügig nach außen gedrückt werden, wodurch eine elastische Vorspannung auf die Rohrverbindung 10 eingebracht werden kann. Nach außen gedrückte, also geringfügig aufgefächerte Klemmhaken 25 sind in Figur 2 nicht dargestellt.

Die L-förmige Gestalt 27 der Klemmhaken 25 ist im unteren Teil der Schnittdarstellung der Überwurfmutter 15 in punktierter Linienart schematisch angedeutet.

Im Inneren der Rohrverbindung 10 ist ein Wärmedämmrohr 30 angeordnet. Das Wärmedämmrohr 30 ist zumindest in demjenigen axialen Abschnitt der Rohrverbindung 10 angeordnet, an dem das innen sitzende Anschlussstück - hier Anschlussstück 14 - mit seiner Dichtfläche 21 an der anderen Dichtfläche 22 anliegt. Gemäß dem Ausführungsbeispiel ist jedoch das Wärmedämmrohr in beide Richtungen axial verlängert, wobei die Enden 32, 34 des Wärmedämmrohres 30 nach Möglichkeit dicht an den Innenflächen der Anschlussstücke 12, 14 anliegen, so dass ein Einströmen des Fluids in einen Zwischenraum 36 zwischen Wärmedämmrohr 30 und den Innenflächen der Anschlussstücke 12, 14 vermieden wird. Zudem ist an der äußeren Mantelfläche des Wärmedämmrohres 30 ein Bund 38 vorgesehen, der axial zwischen den beiden Anschlussstücken 12, 14 fixiert ist.

Anstelle eines Wärmedämmrohres 30 besteht selbstverständlich auch die Möglichkeit, an den Innenflächen der Rohrverbindung 10, welche beim Stand der Technik bisher im unmittelbaren Kontakt mit dem durchzuleitenden Fluid standen, eine Wärmedämmschicht anzubringen, um den Wärmetransport zwischen Rohr- bzw. Kegelmaterial und dem Fluid bei Änderung der Fluid-Temperatur zu verzögern. Dies trägt auch zu einer verbesserten Dichtigkeit der Rohrverbindung 10 und zu einer Vergrößerung des Losbrechmoments der Überwurfmutter 15 bei.

## Patentansprüche

1. Rohrverbindung (10) zur Durchleitung eines unter Druck stehendes Fluids,
umfassend zwei rohrförmige Anschlussstücke (12, 14),
die nach Art einer Kegelklemmverbindung (16) ineinandersteckend von einer Überwurfmutter (15) miteinander verschraubt sind,
wobei jedes Anschlussstück (12, 14) eine konische Dichtfläche (21, 22) aufweist, welche jeweils an der anderen der beiden Dichtflächen (22, 21) anliegt, wobei die Überwurfmutter (15) einen rohrförmigen Abschnitt (B) umfasst, der zumindest teilweise ein Innengewinde aufweist zum Verschrauben der Überwurfmutter (15) auf einem ersten rohrförmigen Anschlussstück (12) und
einen an einem Ende des rohrförmigen Abschnitts (B) angeordneten Kragen (20) zum axialen Verspannen eines rohrförmigen zweiten Anschlussstückes (14) mit dem ersten Anschlussstück (12), **dadurch gekennzeichnet, dass** der Kragen (20) eine Anzahl von entlang des Umfangs verteilten Schlitzen (23) aufweist.

2. Rohrverbindung (10) nach Anspruch 1,
**dadurch gekennzeichnet, dass**
bei der Überwurfmutter (15) die Schlitze (23) eine derartige in Axialrichtung erfassbare Schlitzlänge (C) aufweisen, dass sich diese bis in den rohrförmigen Abschnitt (B) hinein erstrecken.

3. Rohrverbindung (10) nach Anspruch 1 oder 2,
**dadurch gekennzeichnet, dass**
die Überwurfmutter (15) eine axiale Gesamtlänge (A) aufweist und sich die Schlitze (23) bis zur Mitte der Gesamtlänge (A) erstrecken.

4. Rohrverbindung (10) nach Anspruch 1 bis 3,
bei dem das innen sitzende Anschlussstück (14) zumindest im axialen Abschnitt seiner Dichtfläche (21) rohrinnenseitig eine Wärmedämmung (30) aufweist.

5. Verwendung einer Rohrverbindung (10) nach einem der Ansprüche 1 bis 4, zur Durchleitung eines Fluids, dessen Temperatur stetig variiert oder zumindest kurzfristig von der Temperatur der Rohrverbindung um mehr als 100 K abweicht.

## Claims

1. Pipe connection (10) for conducting a pressurized fluid, comprising two tubular connection pieces (12, 14) which are screwed together by a union nut (15) in the manner of a conical clamping connection (16) with one plugged into the other,
wherein each connection piece (12, 14) has a conical sealing surface (21, 22) which bears in each case against the other of the two sealing surfaces (22, 21),
wherein
the union nut (15) comprises a tubular portion (B) which at least partially has an internal thread for screwing the union nut (15) on a first tubular connection piece (12), and
a collar (20), arranged at one end of the tubular portion (B), for axially clamping a tubular second connection piece (14) to the first connection piece (12), **characterized in that** the collar (20) has a number of slits (23) distributed around its circumference.

2. Pipe connection (10) according to Claim 1,
**characterized in that**
in the union nut (15) the slits (23) have such a slit length (C) that is measurable in the axial direction that said slits (23) extend into the tubular portion (B).

3. Pipe connection (10) according to Claim 1 or 2,
**characterized in that**
the union nut (15) has an overall axial length (A) and the slits (23) extend as far as the middle of the overall length (A).

4. Pipe connection (10) according to Claims 1 to 3,
in which the connection piece (14) located on the inside has thermal insulation (30) on the inner side of the pipe, at least in the axial portion of the sealing surface (21) of said connection piece (14).

5. Use of a pipe connection (10) according to one of Claims 1 to 4 for conducting a fluid, the temperature of which varies constantly or at least briefly deviates by more than 100 K from the temperature of the pipe connection.

## Revendications

1. Raccord ( 10 ) de tuyauterie pour le passage d'un fluide sous pression,
comprenant deux pièces ( 12, 14 ) tubulaires de raccord qui, en s'emboîtant l'une dans l'autre à la manière d'un assemblage ( 16 ) par serrage conique, sont vissées l'une à l'autre par un écrou ( 15 ) à chapeau,
dans lequel chaque pièce ( 12, 14 ) de raccord a une surface ( 21, 22 ) d'étanchéité conique, qui s'applique respectivement à l'autre des deux surfaces ( 22, 21 ) d'étanchéité,
dans lequel l'écrou ( 15 ) à chapeau comprend un segment ( B ) tubulaire, qui a, au moins en partie, un taraudage pour visser l'écrou ( 15 ) à chapeau sur une première pièce ( 12 ) tubulaire de raccord et
un collet ( 20 ) disposé à une extrémité du segment ( B ) tubulaire pour le blocage axial d'une deuxième pièce ( 14 ) de raccord tubulaire à la première pièce ( 12 ) de raccord, **caractérisé en ce que**
le collet ( 20 ) a un certain nombre de fentes ( 23 ) réparties sur le pourtour.

2. Raccord ( 10 ) de tuyauterie suivant la revendication 1, **caractérisé en ce que**
dans l'écrou ( 15 ) à chapeau, les fentes ( 23 ) ont une longueur ( C ) pouvant être détectée dans la direction axiale, de manière à ce qu'elles s'étendent jusque dans le segment ( B ) tubulaire.

3. Raccord ( 10 ) de tuyauterie suivant la revendication 1 ou 2, **caractérisé en ce que**
l'écrou ( 15 ) à chapeau a une longueur ( A ) axiale totale et les fentes ( 23 ) s'étendent jusqu'au milieu de la longueur ( A ) totale.

4. Raccord ( 10 ) de tuyauterie suivant l'une des revendications 1 à 3,
dans lequel la pièce ( 14 ) de raccord se trouvant à l'intérieur a, au moins dans la partie axiale de sa surface ( 21 ) d'étanchéité du côté tubulaire intérieur, un calorifugeage ( 30 ).

5. Utilisation d'un raccord ( 10 ) de tuyauterie suivant l'une des revendications 1 à 4 pour le passage d'un fluide, dont la température varie constamment ou qui s'écarte, au moins pendant une durée brève, de la température du raccord de tuyauterie de plus de 100 K.
